# FASCICULE DE BREVET EUROPEEN

(11) **EP 0 909 918 B1**
(45) Date de publication et mention de la délivrance du brevet: **01.03.2006**
(21) Numéro de dépôt: 98402510.6
(22) Date de dépôt: 09.10.1998
(51) Int. Cl.: F21V 8/00

(54) **Dispositif destiné à éclairer des fibres optiques**
Zur Beleuchtung von optischen Fasern bestimmte Vorrichtung
Device for optical fibers illumination

(30) Priorité: 15.10.1997 FR 9712874
(43) Date de publication de la demande: 21.04.1999
(73) Titulaire: Gaquiere, Joel Denis Marie, 92140 Clamart (FR); AMBIANCE LUMIERE Société Anonyme, 94140 Alfortville (FR)
(72) Inventeur: Gaquiere, Joel, Denis, Marie, 92140 Clamart (FR)
(74) Mandataire: Vander-Heym, Serge Henri Marcel

(56) Documents cités:
- EP-A- 0 528 127
- WO-A-97/10471
- FR-A- 2 705 435
- US-A- 4 411 490

## Description

La présente invention est relative à des perfectionnements aux dispositifs destinés à éclairer les fibres optiques plus couramment dénommés "générateurs de lumière" ou "sources lumineuses".

Une source lumineuse comporte, généralement, une lampe d'éclairage et un dispositif optique pour concentrer les rayons lumineux sur l'extrémité du faisceau de fibres optiques, la source comporte également un transformateur si on utilise une lampe basse tension. Tous ces éléments sont enfermés dans un boîtier fermé.

L'élévation de température à l'intérieur du boîtier est inacceptable car la destruction de la fibre est à craindre. De ce fait, on est obligé de ventiler mais, l'air qui circule à l'intérieur du boîtier véhicule des poussières qui se déposent avec tous les inconvénients que cela peut présenter.

La présente invention, qui remédie à ces inconvénients, est remarquable en ce que les rayons lumineux traversent une enceinte, étanche à la poussière au moins, constituée par un prisme droit à base triangulaire chacune des faces de ce prisme comportant une ouverture obturée respectivement par la face avant de la lampe usuelle, par un miroir et par une lentille qui fait converger les rayons vers l'extrémité du faisceau de fibres, ladite extrémité étant maintenue en dehors de l'enceinte.

Le miroir utilisé est du genre de ceux pouvant être traversés par les rayons infrarouges. De cette façon, une partie de la chaleur, celle réfléchie par le projecteur de la lampe et la lampe elle-même, sort de l'enceinte, à travers le miroir, sans atteindre le faisceau. Un dispositif comprenant un prisme droit et un tel miroir est décrit dans le document WO 97/10471. L'autre partie est rayonnée par la face externe du projecteur et le culot de la lampe qui, selon l'invention, se trouvent à l'extérieur de l'enceinte.

La présente invention sera mieux comprise par le description qui va suivre faite en se référant au dessin annexé à titre d'exemple indicatif, seulement, sur lequel :
- la figure 1 est une vue en perspective montrant la forme de l'enceinte de support des organes optiques;
- la figure 2 est une vue en coupe verticale d'une source conforme à l'invention.

Selon l'invention, les organes nécessaires pour éclairer, dans de bonnes conditions, l'extrémité d'un faisceau 1 de fibres optiques, sont portés par un boîtier 2 affectant la forme d'un prisme droit à base triangulaire.

Chacune des faces latérales 3, 4 et 5 de ce boîtier présente une ouverture respectivement 6, 7 et 8. Les faces 3 et 5 sont disposées à angle droit.

L'ouverture 6 est obturée par la face avant du réflecteur 9 de la lampe usuelle, ledit réflecteur et son culot 10 étant situés à l'extérieur du boîtier 2.

L'ouverture 7 est obturée par un miroir 11, d'un type connu, du genre de ceux ayant la propriété d'être traversés par les rayons infrarouges.

L'ouverture 8 est obturée par une lentille 12 concentrant les rayons lumineux, réfléchis par le miroir 11, sur l'extrémité 1a du faisceau 1.

Les rayons chauds, réfléchis par le réflecteur de la lampe, traversent librement le miroir 11 et ne peuvent pas atteindre l'extrémité 1a du faisceau.

De par la disposition de la lampe par rapport au boîtier, la partie de la chaleur rayonnée par la face externe de la dite lampe est dissipée dans l'air ambiant.

Les lampes utilisées sont fabriquées en grande série et leurs caractéristiques sont parfois incertaines. De ce fait, il est possible que certain rayons chauds ne rencontrent pas le miroir 11 et traversent la lentille 12. Selon l'invention, ceux-ci se trouvent refroidis dans l'espace 13 ménagé entre la paroi externe du boîtier et l'extrémité 1a du faisceau.

On sait aussi, pour les raisons évoquées ci-dessus, qu'une partie de l' énergie lumineuse émise par la lampe ne rencontre pas le miroir 11 ou, dans les dispositifs connus, n'est pas renvoyée vers la lentille 12.

Selon une autre caractéristique de l'invention, qui remédie à cet inconvénient, toutes les surfaces internes du boîtier sont réfléchissantes.

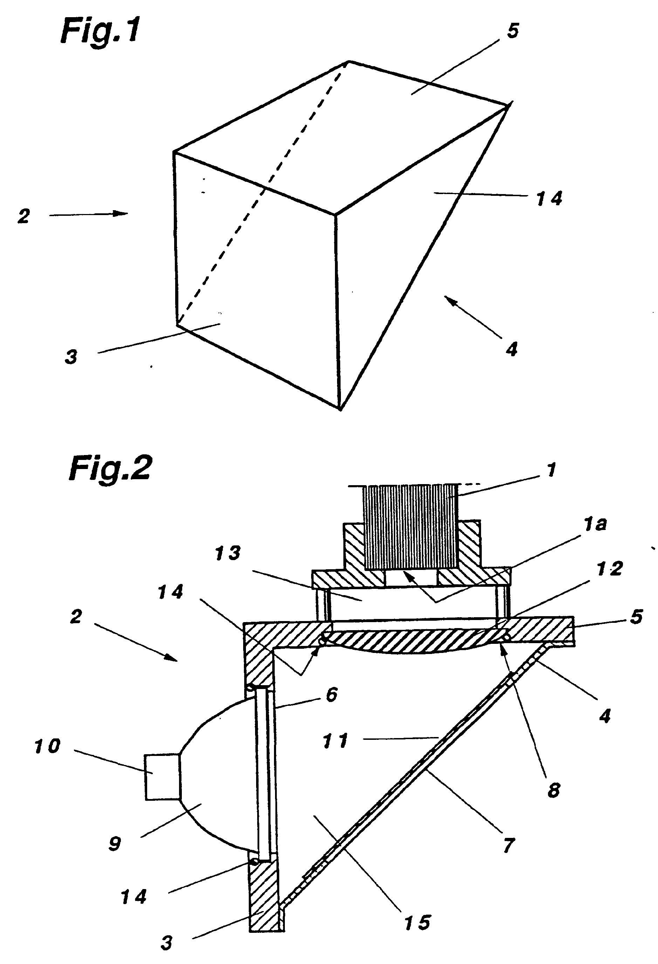

Comme cela ressort de la figure 2, le boîtier 2 est étanche à la poussière au moins. L'étanchéité, peut être réalisé à l' aide de joints (non représentés), le maintien des organes 9 et 12 étant assuré par des circlips 14. En ce qui concerne le miroir 11, celui-ci peut être maintenu par collage.

Les bases triangulaires 15 peuvent être venues de moulage avec les faces 3 et 5 ou être portées par la face 4.

Pour des raisons de protection mécanique, l'ensemble qui vient d'être écrit ci-dessus est maintenu dans une enveloppe (non représentée) réalisée, par exemple, en tôle perforée. Cette enveloppe peut, avantageusement, supporter le transformateur d'alimentation usuel (cas de l'utilisation d'une lampe basse tension) et, ou, un mécanisme de changement de couleur.

## Revendications

1. Dispositif destiné à éclairer des fibres optiques comportant un miroir réfléchissant (11) pouvant être traversé librement par les rayons infrarouges, **caractérisé en ce qu'**il est constitué par une enceinte étanche à la poussière, constituée par un prisme droit (2) à base triangulaire comportant des ouvertures (6,7,8) obturée, de façon étanche, respectivement par le réflecteur (9) de la lampe usuelle par le miroir plan (11) et par une lentille (12) faisant converger les rayons vers l'extrémité du faisceau de fibres optiques, la chaleur émise par le dispositif étant dissipée dans l'air ambiant.

2. Dispositif selon la revendication 1, **caractérisé en ce qu'** un espace est ménagé entre une face latérale dudit prisme et l'extrémité (1a) du faisceau de fibres.

3. Dispositif selon l'une quelconque des revendications 1 et 2, **caractérisé en ce que** les faces internes de l'enceinte sont réfléchissantes.

4. Dispositif selon l'une quelconque des revendications 1 à 3, **caractérisé en ce que** les faces comportant la lampe et la lentille sont disposées à angle droit.

5. Dispositif selon l'une quelconque des revendications 1 à 4, **caractérisé en ce que** le boîtier (2) est maintenu dans une enveloppe rigide de protection perforée.

## Claims

1. A device intended for lighting optical fibres comprising a reflecting mirror (11) that can be crossed freely by infrared rays, **characterised in that** it is made up of a dust-proof enclosure, made up of a straight prism (2) with a triangular base comprising openings (6, 7, 8) hermetically blocked, respectively, by the reflector (9) of the usual lamp, the flat mirror (11) and a lens (12) that causes the rays to converge towards the end of the bundle of optical fibres, with the heat emitted by the device being dissipated into the surrounding air.

2. A device according to claim 1, **characterised in that** a space is provided between one lateral face of the said prism and the end (1a) of the bundle of fibres.

3. A device according to claim 1 or 2, **characterised in that** the inner faces of the enclosure are reflective.

4. A device according to any of the claims 1 to 3, **characterised in that** the faces that comprise the lamp and the lens are arranged at a right angle.

5. A device according to any of the claims 1 to 4, **characterised in that** the case (2) is kept in a perforated rigid protective cover.

## Patentansprüche

1. Zur Beleuchtung von Lichtleitfasern bestimmte Vorrichtung mit einem reflektierenden Spiegel (11), der ungehindert durch Infrarotstrahlen durchquert werden kann, **dadurch gekennzeichnet, dass** sie durch eine staubdichte Einfassung gebildet wird, die durch ein gerades Prisma (2) mit dreieckiger Basis mit jeweils vom Reflektor (9), der üblichen Lampe durch den ebenen Spiegel (11) und durch eine die Strahlen zum Ende des Lichtleitfaserbündels zusammenfallen lassenden Linse (12) abgedichtet verschlossenen Öffnungen (6, 7, 8) gebildet wird, wobei die von der Vorrichtung abgegebene Wärme in der Raumluft verteilt wird.

2. vorrichtung gemäß Anspruch 1, **dadurch gekennzeichnet, dass** ein Raum zwischen einer lateralen Seite des genannten Prismas Seite und dem Ende (1a) des Faserbündels ausgespart ist.

3. Vorrichtung gemäß Anspruch 1 und 2, **dadurch gekennzeichnet, dass** die inneren Seiten der Einfassung reflektierend sind.

4. Vorrichtung gemäß Anspruch 1 bis 3, **dadurch gekennzeichnet, dass** die die Lampe und die Linse umfassenden Seiten rechtwinklig angeordnet sind.

5. Vorrichtung gemäß Anspruch 1 bis 4, **dadurch gekennzeichnet, dass** das Gehäuse (2) in einer steifen, perforierten Schutzumhüllung gehalten wird.
